Europäisches Patentamt

European Patent Office

Office européen des brevets

(11) Publication number: **0 178 781**
**B1**

(12) **EUROPEAN PATENT SPECIFICATION**

(45) Date of publication of patent specification: **09.08.89**

(21) Application number: **85306484.8**

(22) Date of filing: **12.09.85**

(51) Int. Cl.⁴: **B 60 K 41/02, B 60 K 41/22, F 16 D 27/16**

(54) **Electromagnetic clutch control system for automobiles.**

(30) Priority: **13.09.84 JP 193408/84**

(43) Date of publication of application:
**23.04.86 Bulletin 86/17**

(45) Publication of the grant of the patent:
**09.08.89 Bulletin 89/32**

(84) Designated Contracting States:
**DE GB IT NL**

(56) References cited:
**EP-A-0 092 950**
**EP-A-0 151 038**
**DE-A-3 004 930**
**FR-A- 77 747**
**FR-A-2 492 023**
**GB-A-2 088 011**
**US-A-2 920 726**
**US-A-3 134 470**

(73) Proprietor: **FUJI JUKOGYO KABUSHIKI KAISHA**
**7-2 Nishishinjuku 1-chome Shinjuku-ku**
**Tokyo (JP)**

(72) Inventor: **Sakakiyama, Ryuzo**
**1-21 Takamatsu Toshima-ku**
**Tokyo (JP)**

(74) Representative: **Shindler, Nigel et al**
**BATCHELLOR, KIRK & EYLES 2 Pear Tree Court**
**Farringdon Road**
**London EC1R 0DS (GB)**

Courier Press, Leamington Spa, England.

## Description

The present invention relates to a system for controlling an electromagnetic clutch for an automotive engine, and more particularly to a system for controlling clutch current on engagement of the clutch.

An electromagnetic powder clutch as a kind of the electromagnetic clutch for a motor vehicle is known, for example in U.S. patent No. 4,494,641. The electromagnetic powder clutch comprises an annular drive member secured to a crankshaft of an engine, a magnetising coil provided in the drive member, a driven member secured to an input shaft of a transmission and provided adjacent to the drive member with a small gap and magnetic powder provided in a chamber in the clutch. Change speed gears in the transmission are operated by a selector lever. The selector lever is provided with a switch for the circuit of the magnetising coil. When the selector level is gripped by the operator's hand, the switch is opened to cut off the clutch current. Accordingly, change gear operation of the transmission can be done. When the selector lever is shifted to the gear engaging position, and released from the hand, the switch is closed so that electric current flows through the magnetising coil to magnetise the drive member. As engine speed increases in accordance with the depression of an accelerator pedal, the clutch current applied to the coil increases with increase of repetition frequency of ignition pulses. The magnetic powder is aggregated in the gap between the drive member and the driven member, so that the driven member is coupled to the drive member. More particularly, the clutch current passing the magnetising coil progressively increases according to the increase of frequency of the ignition pulses, while the clutch slips between the drive member and driven member and gradually engages until the clutch current increases to rated current. Thus the motor vehicle may be smoothly started by depressing the accelerator pedal without operating a clutch pedal.

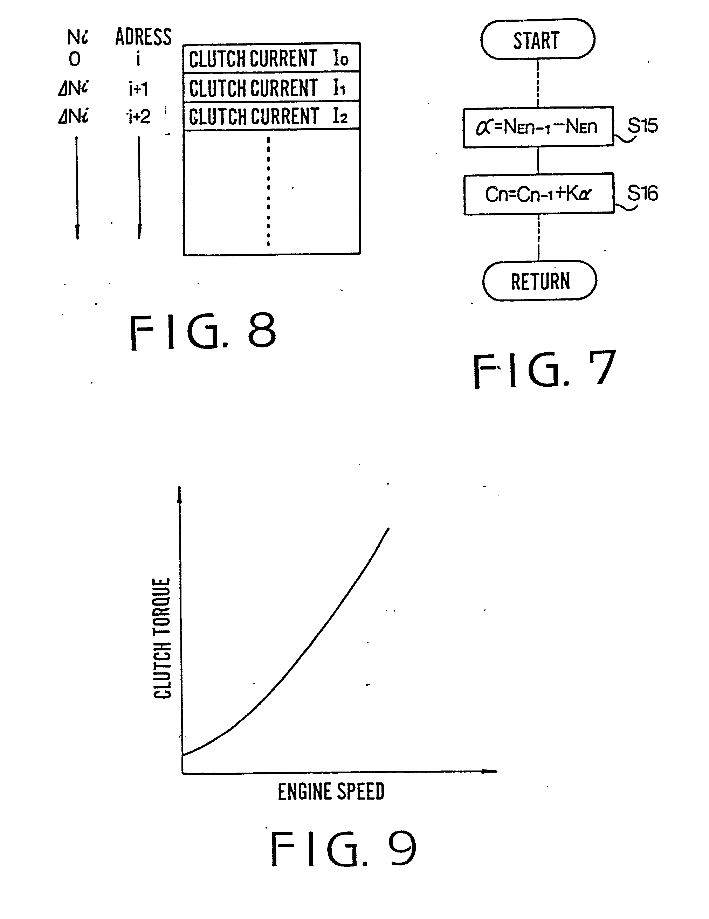

Figure 9 shows the relationship between engine speed and clutch torque. The clutch torque increases exponentially with increase of engine speed.

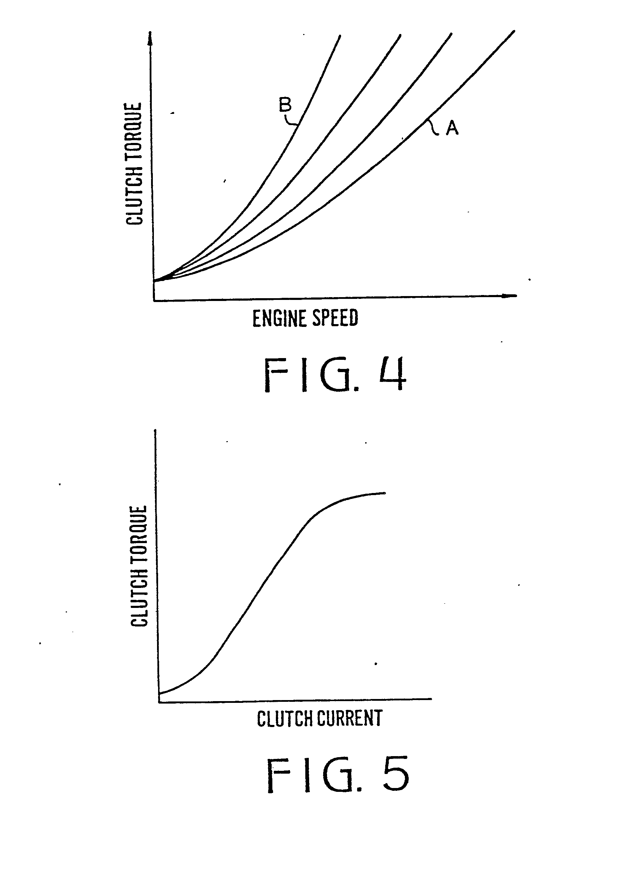

Another type of clutch current control is shown in EP—A—92950, which discloses a control circuit for the starting process of a hydraulically controlled starting clutch wherein the clutch engagement signal characteristic is created by the addition of an engine speed responsive characteristic (see Figure 5) and an accelerator pedal position responsive characteristic (Figure 4).

However, it is desirable to vary the speed of the engaging of the clutch in accordance with the rate of increase of the engine speed, in order to reduce the shock at the engagement of the clutch.

The present invention seeks to provide a system which controls clutch current in accordance with the magnitude of acceleration and deceleration of engine speed, so that a motor vehicle can be started smoothly.

According to the present invention, there is provided a system for controlling an electromagnetic clutch of an engine for a motor vehicle having a transmission, comprising:

engine speed sensing means for producing an engine speed signal;

vehicle speed sensing means for producing a vehicle speed signal in a low vehicle speed range;

an accelerator pedal position sensor for producing a signal when the accelerator pedal of the vehicle is depressed;

selector lever position detecting means for producing a selector lever signal when a selector lever of the transmission is positioned at positions other than the "neutral" or "parking" positions;

circuit means for supplying clutch current to the magnetising coil of the electromagnetic clutch and

control means responsive to the engine speed signal, vehicle speed signal, and selector lever signal for controlling the circuit means so as to control the clutch current on engagement of the electromagnetic clutch so that the clutch current increases with increase of engine speed; characterised in that the control means further comprises:

means for producing an acceleration signal from the said accelerator position sensors; and means for increasing the rate of increase of the clutch current in accordance with the acceleration signal.

One embodiment of the invention will now be described by way of example with reference to the accompanying drawings, in which:

Figure 1 is a cross-sectional view of an electromagnetic powder clutch used in a system according to the present invention;

Figure 2 is a cross-section taken along line Z—Z of Figure 1;

Figure 3 is a block diagram showing an embodiment of the present invention;

Figure 4 is a graph showing the relationship between engine speed and clutch torque in the system of the present invention;

Figure 5 is a graph showing the relationship between the clutch current and the clutch torque;

Figures 6 and 7 are flowcharts showing the operation of the system;

Figure 8 is a schematic view showing a table for clutch current; and

Figure 9 is a graph showing the relationship between clutch torque and the engine speed of a conventional system.

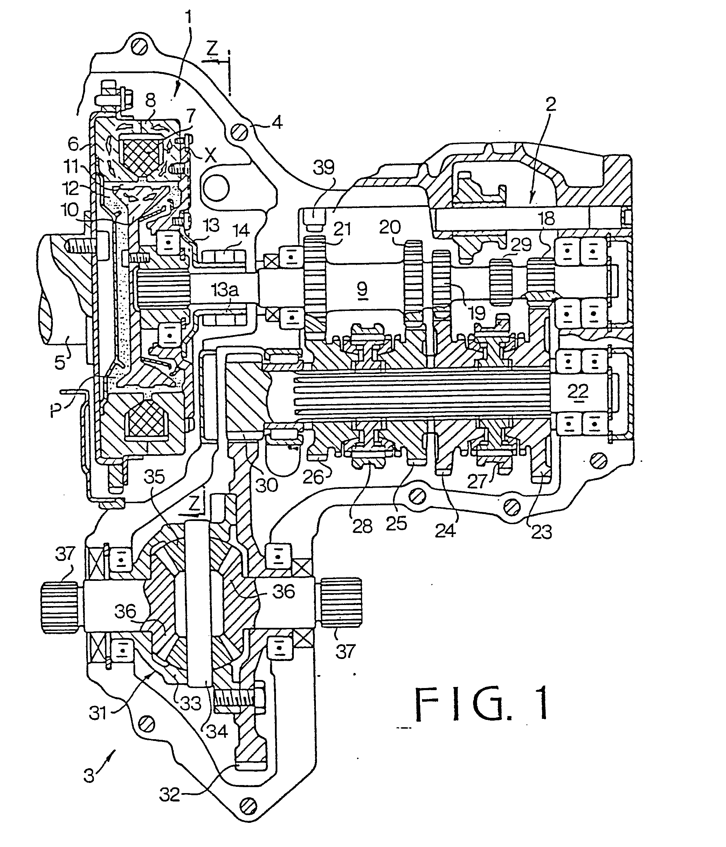

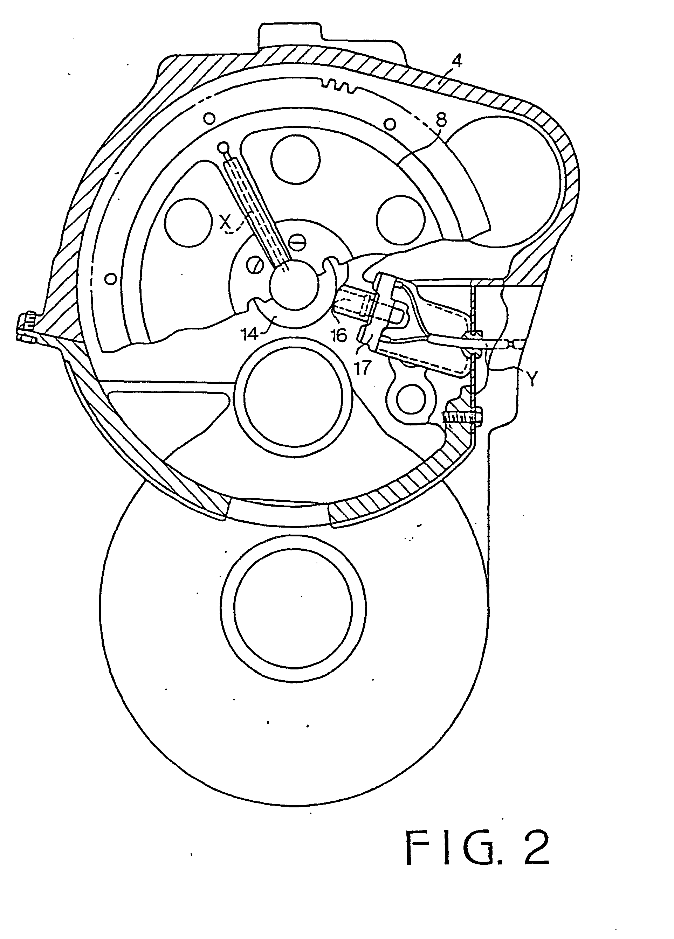

Referring to Figures 1 and 2 showing a transmission system to which the present invention is applied, the transmission system comprises an electromagnetic powder clutch 1, a four-speed transmission 2 and a final reduction device 3.

The electromagnetic powder clutch 1 provided in a clutch case 4 comprises a drive plate 6 secured to the end of a crankshaft 5 of an internal combustion engine, an annular drive member 8 secured to the drive plate 6, a magnetising coil 7 provided in the drive member 8, and a driven member 10 secured by a spline engagement to an input shaft 9 of the transmission 2, leaving a gap 11 from the drive member 8 and driven member 10.

Magnetic powder is provided in a powder chamber 12 and gap 11 is adapted to be filled with the powder. A cap 13 is secured to the drive member 8. The cap 13 has a cylindrical portion coaxial with the input shaft 9, on which slip rings 14 are securely provided. Slip rings 14 are connected to the drive member 8 by a lead X. Brushes 16 pressed against slip rings 14 are supported in a holder 17 and connected to a hereinafter described control system by a lead Y.

In such a construction, the drive plate 6 and the drive member 8 rotate together with the crankshaft 6 and the magnetic powder sealed into the powder chamber 12 is moved on the inner surface of the drive member 8 by centrifugal force. If the magnetising coil 7 is excited by the current applied through the lead Y brushes 16, slip rings 14 and lead X, the drive member 8 is magnetised to produce a magnetic flux passing through the driven member 10. Thus, the powder is aggregated in the gap 11, so that the power of the engine is transmitted to the input shaft 9 through the clutch.

In the transmission 2, 1st to 4th speed drive gears 18 to 21 are integrally provided on the input shaft 9. The drive gears 18 to 21 are engaged with driven gears 23 to 26, respectively. Driven gears 23 to 26 are rotatably mounted on the output shaft 22 parallel to the input shaft 9. Each of driven gears 23 and 24 is adapted to be engaged with the output shaft 22 by operating a synchroniser 27 and each of driven gears 25 and 26 is engaged with the output shaft 22 by a synchroniser 28 in the well known manner. Further, a reverse drive gear means 29 is provided. Thus, by operating a selector lever (not shown) of the transmission, the drive gear 23 is coupled selectively with the output shaft 22 by the synchroniser 27 and the first speed is obtained on the output shaft 22 and the speed of output shaft 9 is greatly decreased, and the second, third and fourth speed may be respectively obtained accordingly.

Further, provided on an end of the output shaft 22 is an output gear 30 which engages with a ring gear 32 in a differential 31 of the final reduction device 3 to transmit the output of the output shaft 22 of the transmission 2 directly from ring gear 32 to side gears 36 through a case 33, a spider 34 and pinions 35, and further to driving wheels of a motor vehicle through wheel shafts 37.

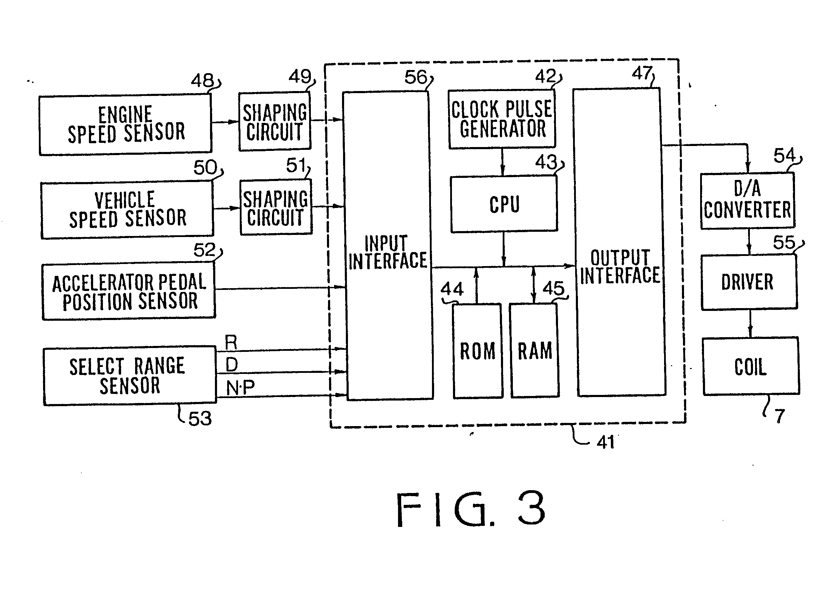

Figure 3 shows the control system which is provided with an engine speed sensor 48, vehicle speed sensor 50, accelerator pedal position sensor 52 for producing an output signal dependent on the degree of the depression of an accelerator pedal of the motor vehicle, and select range sensor 53 for producing an output signal when the selector lever is positioned at drive positions, other than the neutral position and the parking positions, that is one of first to fourth speed positions or revese position in the transmission of Figure 1.

Output signals of sensor 48, 50 are applied to an input interface 56 of a microcomputer 41 through waveform shaping circuits 49, 51, respectively.

Output signals of sensors 52 and 51 are also applied to the input interface 56. The microcomputer comprises a clock pulse generator 42, CPU 43, ROM 44, RAM 45, and output interface 47. The output of the microcomputer is converted to an analog signal by a D/A converter 54 and applied to the coil 7 through a driver 55.

The control system of the present invention is adapted to control the characteristic of clutch torque in accordance with engine speed so as to smoothly start the motor vehicle. The clutch torque characteristic of the present invention is shown in Figure 4. A line A shows the slowest characteristic at the beginning of the depression of the accelerator pedal. Thereafter, the characteristic changes towards a line B as the magnitude of acceleration of engine speed increases. Namely, when the accelerator pedal is depressed rapidly, the clutch torque characteristic rapidly moves to the line B, and when the acceleration is small, the characteristic slowly moves to the line B. When the acceleration is zero, that is engine speed is constant, the characteristic is intermediate between lines A and B. When engine speed decreases the characteristic moves to the line A.

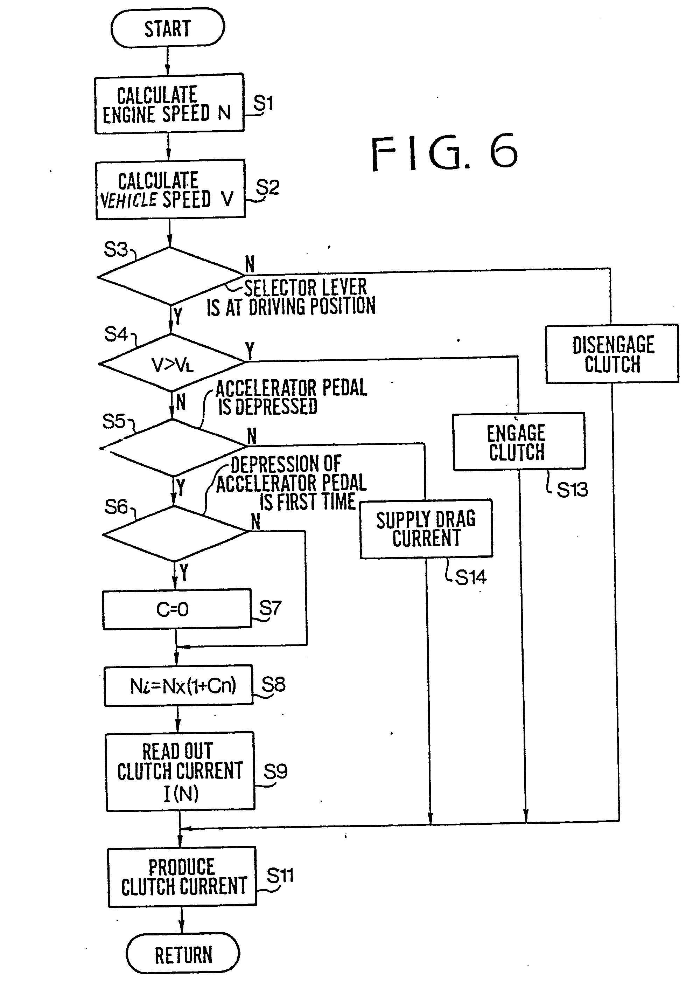

The operation of the control system will now be explained with reference to Figures 6 and 7. At step $S_1$, engine speed N is read out, and at step $S_2$, vehicle speed V is read out. Thereafter, at step $S_3$, it is determined whether the selector lever is in a driving position. If the selector lever is in the neutral position or parking position, the clutch current is cut off to disengage the clutch. If the selector lever is at a drive or reverse position, the program proceeds to a step $S_4$, where it is determined whether the vehicle speed V is higher than a predetermined vehicle speed $V_L$ (10—25 Km/h). If V is higher than $V_L$, the rated clutch current flows passing the coil to entirely engage the clutch at a step $S_{13}$. If V is lower than $V_L$, the program proceeds to a step $S_5$, where it is determined whether the accelerator pedal is depressed. If the accelerator pedal is released, a drag current is supplied to the coil 7 at a step $S_{14}$ so as to partially engage the clutch. If the accelerator pedal is depressed, the program proceeds to a step $S_6$, where it is decided whether the depression of the accelerator pedal is the first time. If it is the first time, the program proceeds to a step $S_7$, where the number of times of the depression, that is, zero is set (C=0). If the depression is not the first time, or after the operation at the step $S_7$ has finished, the program proceeds to a step $S_8$, where the product of the engine speed N and $(1+C_n)$ is performed to obtain a correcting value $N_i$ ($N_i=N(1+C_n)$). At a step $S_9$ clutch current I(N) according to the value $N_i$ is derived from a table in the ROM 44. Figure 8 shows the table, in which clutch current is decided so as to produce clutch torque as shown in Figure 5.

On the other hand, the coefficient $C_n$ is obtained by a subroutine shown in Figure 7, where n is the number of operations. The subroutine is initiated by a timer at intervals of a predetermined time $\Delta T$ (several m.sec. to 50 m.sec.). At a step $S_{15}$, acceleration $\alpha$ of engine speed N is obtained by the operation of $(N_{n-1}-N_n)$ for the interval $\Delta T$. At a step $S_{16}$, the coefficient $C_n$ is obtained by adding $K\alpha$ to the last coefficient $C_{n-1}$, where K is a constant $(C_n=C_{n-1}+K\alpha)$. At the first cycle of the operation, C is zero, so that $N_l$ is N $(N_l=N)$. After the first operation, the coefficient $C_n$ is decided in accordance with the acceleration of engine speed. For example, when $C_n=0.5$, $N_l=1.5$ N. Clutch current is obtained from the table of Figure 8 by the value of $N_l=1.5$ N. The coefficient $C_n$ is decided between zero and a limit value. The limit value corresponds to the characteristic B of Figure 4, and the coefficient of zero $(C_n=0)$, corresponds to the characteristic A.

Although the above described control system employs a stepwise transmission, an infinitely variable belt drive transmission can be employed for the system of the present invention.

From the foregoing it will be understood that the present invention provides a system which controls the clutch current in accordance with the rate of variation of engine speed, whereby a motor vehicle can be smoothly started.

## Claims

1. A system for controlling an electromagnetic clutch of an engine for a motor vehicle having a transmission, comprising:

engine speed sensing means (48) for producing an engine speed signal;

vehicle speed sensing means (50) for producing a vehicle speed signal in a low vehicle speed range;

an accelerator pedal position sensor (52) for producing a signal when the accelerator pedal of the vehicle is depressed;

selector lever position detecting means (53) for producing a selector lever signal when a selector lever of the transmission is positioned at positions other than the "neutral" or "parking" positions;

circuit means (54, 55) for supplying clutch current to the magnetising coil of the electromagnetic clutch; and

control means (41) responsive to the engine speed signal, vehicle speed signal, and selector lever signal for controlling the circuit means so as to control the clutch current on engagement of the electromagnetic clutch so that the clutch current increases with increase of engine speed; characterised in that the control means further comprises:

means for producing an acceleration signal from the said accelerator position sensors; and means for increasing the rate of increase of the clutch current in accordance with the acceleration signal.

2. The system according to claim 1 wherein the control means comprises a microcomputer.

3. The system according to claim 2 wherein the clutch current is read out from a table in accordance with the magnitude of the acceleration of the engine speed.

## Patentansprüche

1. Steueranlage für eine elektromagnetische Kupplung für den Motor eines Kraftfahrzeuges mit einem Getriebe;

mit einem Motordrehzahlsensor (48) zum Erzeugen eines Motordrehzahlsignals;

einem Fahrzeuggeschwindigkeitssensor (50) zum Erzeugen eines Fahrzeuggeschwindigkeitssignals in einem niedrigen Fahrzeuggeschwindigkeitsbereich;

einem Gaspedalpositionssensor (52) zum Erzeugen eines Signals bei niedergedrücktem Gaspedal des Kraftfahrzeuges;

einem Schalthebelpositionssensor (53) zum Erzeugen eines Schalthebelsignals, wenn der Schalthebel des Getriebes sich nicht in der Leerlaufstellung oder Parkstellung befindet;

Stromversorgungsmitteln (54, 55) zum Zuführen eines Kupplungsstromes an die Erregerspule der elektromagnetischen Kupplung; und

Steuermitteln (41), die auf das Motordrehzahlsignal, das Fahrzeuggeschwindigkeitssignal und das Schalthebelsignal ansprechen und über die Stromversorgungsmittel den Kupplungsstrom beim Einkuppeln der elektromagnetischen Kupplung derart steuern, daß er beim Ansteigen der Motordrehzahl ansteigt; dadurch gekennzeichnet, daß die Steuermittel Mittel zum Erzeugen eines Beschleunigungssignals aus dem Gaspedalpositionsgeber sowie Mittel zum Erhöhen der Ansteigrate des Kupplungsstromes in Abhängigkeit von dem Beschleunigungssignal enthalten.

2. Steueranlage nach Anspruch 1, dadurch gekennzeichnet, daß die Steuermittel einen Mikrocomputer enthalten.

3. Steueranlage nach Anspruch 2, dadurch gekennzeichnet, daß der Kupplungsstrom abhängig von der Höhe der Beschleunigung der Motordrehzahl aus einer Tabelle abgelesen wird.

## Revendications

1. Dispositif pour commander l'embrayage électromagnétique d'un véhicule automobile équipé d'une transmission et qui comprend:

des moyens de détection (48) de la vitesse du moteur pour produire un signal représentatif de la vitesse du moteur;

des moyens de détection (50) de la vitesse du véhicule pour produire un signal représentatif de la vitesse de véhicule;

des moyens de détection (52) de la position de la pédale d'accélérateur pour produire un signal lorsque la pédale d'accélérateur du véhicule est abaissée;

des moyens de détection de la position du levier de sélection (53) pour produire un signal représentatif du levier de sélection lorsque celui-ci occupe des positions autres que celles correspondant à la position "neutre" ou "parking";

des circuits (54, 55) pour envoyer un courant d'embrayage à la bobine de l'embrayage électromagnétique; et

des moyens de commande (41) qui en réponse au signal représentatif de la vitesse du moteur, au signal représentatif du véhicule, au signal représentatif de la position du levier de sélection, commandent les circuits ainsi que le courant d'embrayage de l'embrayage électromagnétique de manière que l'intensité du courant d'embrayage augmente en rapport avec l'augmentation de la vitesse du moteur, caractérisé en ce que les moyens de commande comprennent des moyens pour produire un signal représentatif de l'accélération à partir de la position des senseurs de la position de l'accélérateur, et des moyens pour augmenter le rapport d'augmentation du courant d'embrayage en fonction du signal d'accélération.

2. Dispositif pour commander l'embrayage électromagnétique d'un véhicule automobile, selon la revendication 1, caractérisé en ce que les moyens de commande comprennent un ordinateur.

3. Dispositif pour commander l'embrayage électromagnétique d'un véhicule automobile, selon la revendication 2, caractérisé en ce que le courant d'embrayage est lu sur un indicateur en rapport avec l'amplitude de l'accélération de la vitesse du moteur.

FIG. 1

FIG. 2

FIG. 3

EP 0 178 781 B1

FIG. 4

FIG. 5

# FIG. 6

START

CALCULATE ENGINE SPEED N — S1

CALCULATE VEHICLE SPEED V — S2

S3 — SELECTOR LEVER IS AT DRIVING POSITION — N / Y

S4 — V>VL — Y / N ... ACCELERATOR PEDAL IS DEPRESSED

S5 — DEPRESSION OF ACCELERATOR PEDAL IS FIRST TIME — N / Y

S6 — N / Y

DISENGAGE CLUTCH

ENGAGE CLUTCH — S13

SUPPLY DRAG CURRENT — S14

C=0 — S7

$N_i = N \times (1+Cn)$ — S8

READ OUT CLUTCH CURRENT I(N) — S9

PRODUCE CLUTCH CURRENT — S11

RETURN

| N$\dot{c}$ | ADRESS | |
|---|---|---|
| 0 | i | CLUTCH CURRENT I$_0$ |
| $\Delta N\dot{c}$ | i+1 | CLUTCH CURRENT I$_1$ |
| $\Delta N\dot{c}$ | i+2 | CLUTCH CURRENT I$_2$ |
| | | |

# FIG. 8

START

$\alpha$=N$_{EN-1}$−N$_{EN}$  S15

C$_n$=C$_{n-1}$+K$\alpha$  S16

RETURN

# FIG. 7

FIG. 9